# EUROPEAN PATENT SPECIFICATION

(11) **EP 0 560 426 B1**
(45) Date of publication and mention of the grant of the patent: **06.08.1997**
(21) Application number: 93200565.5
(22) Date of filing: 01.03.1993
(51) Int. Cl.: H04B 10/08, G01M 11/00

(54) **Method with device for detecting reflections**
Verfahren mit Vorrichtung zur Detektion von Reflektionen
Procédé avec dispositif pour la détection des réflexions

(30) Priority: 09.03.1992 NL 9200436
(43) Date of publication of application: 15.09.1993
(73) Proprietor: Koninklijke PTT Nederland N.V., 2509 CH Den Haag (NL)
(72) Inventor: Verhoof, Jeroen Waltherus, NL-2625 HR Delft (NL)

(56) References cited:
- EP-A- 0 084 371
- DE-A- 4 018 379
- GB-A- 2 138 234
- PATENT ABSTRACTS OF JAPAN vol. 6, no. 212 (P-151)26 October 1982 & JP-A-57 118 136
- IEEE INSTRUMENTATION AND MEASUREMENT TECHNOLOGY CONFERENCE 13 February 1990, SAN JOSE, CALIFORNIA, USA pages 329 - 333, XP000163908 S.A. NEWTON 'Novel Approaches to Optical Reflectometry'

## Description

### A. BACKGROUND OF THE INVENTION

The invention relates to a method for determining fault locations in an optical network for transmitting optical signals via optical fibres, such as, for example, telephone signals or TV signals between an exchange and subscribers, which optical signals are generated in a light source with a particular wavelength, of which the output signal, by means of an electro-optical modulator, is modulated by an electrical modulation signal fed to said modulator, an optical measuring signal being fed to the network at least in the case of a fibre failure arising, the reaction of the network to that measuring signal being analysed and converted into a location indication of said fibre failure.

Such a method is disclosed by reference [1]. Therein it is proposed to use, for determining the location of a fibre failure, a pulse-shaped "OTDR" signal (OTDR = Optical Time Domain Reflectometer), via a separate "maintenance" wavelength. After having detected that somewhere in the network a fibre failure (for example, fracture) has arisen, it is first detected in which fibre or fibre "tree" the failure is situated and, thereafter, in order to determine at what distance from the signal source that failure is situated, a pulse signal is emitted via the fibre and, based on the reflection time thereof, the failure location is calculated.

A drawback of the known method is that the entire network must be suitable for at least two different wavelengths. Emitting the pulse-shaped measuring signal -which must have a fairly large power - via the same wavelength as that via which the normal signal is transmitted, is undesirable, as the non-faulty subscribers would be inconvenienced by said pulse signal. Per se, another method for measuring reflection locations is disclosed by [2], namely the OFDR method (OFDR = Optical Frequency Domain Reflectometer). In this case, it is proposed to emit a measuring signal having a varying ("sweeping") frequency. The signal reflecting at the fault location is compared with the original measuring signal (actually with a replica thereof), and, by means of frequency analysis of the two signals, the reflection location can be calculated. A device using this method is known from [3].

### B. SUMMARY OF THE INVENTION

The object of the invention is to provide a method for determining the location of a fibre failure in an optical network, in which it is not necessary to employ a separate wavelength, while the connected subscribers are still not or virtually not inconvenienced by a measuring signal emitted on the network (while the normal signal transmission to or to/from the non-faulty subscribers thus continues to proceed).

By means of the invention, provision is made for the output signal of the light source, in addition to said electrical modulation signal, to be furthermore modulated by said electrical measuring signal, resulting in a corresponding optical measuring signal. The measuring signal is thus transmitted through the fibres on the same light "carrier" as the normal signal. It is clear in this context that both the normal optical signal and the optical measuring signal will indeed reach the non-faulty subscribers, but will not reach the faulty subscribers. Both signals will be reflected at the location of the fibre failure. The reflected "normal" signal in this case is of no further significance; the parameters of the reflected measuring signal, however, such as, for example in the case of OTDR the precise moment of the pulse(s), or as in the case of OFDR the frequency spectrum of the measuring signal, are known. As a result it is possible to determine the failure location on the basis of the reflection signals.

Since OTDR measuring pulses, if emitted via the same wavelength as the normal modulation signal - as proposed by the present invention, in contrast to the prior art - cause unacceptable inconvenience to the non-faulty subscribers, for that reason, in fact, the use of OFDR is preferred over OTDR. If, as in the known method, separate transmission wavelengths are employed for transmitting the normal signals and the measuring signal, OTDR pulses cause no inconvenience to non-faulty subscribers, since the signals, after all, are in fact transmitted entirely separately. The method according to the invention is thus preferably further characterised in that the electrical measuring signal is an OFDR signal having a frequency varying according to a defined pattern, reflections caused by the corresponding optical measuring signal at the location of the fibre failure resulting in an optical reflection signal which is converted by an opto-electrical converter into an electrical reflection signal, and said electrical reflection signal being compared with the electrical measuring signal, and the location of the fibre failure being calculated by means of frequency analysis of the two signals. If OFDR is used, the measuring signal "sweeps", as it were, through the normal signal, and as a result, non-faulty subscribers are in practice not inconvenienced or virtually not inconvenienced thereby.

### C. REFERENCES

[1] Hoppitt, C.E.; Astbury, M.L.; Keeble, P.; Chapman, P.A.;
   Operations and maintenance experience of the Bishop's Stortford fibre trail;
   Third IEE Conf. Telecomm. Edinburgh, 17-20 March 1991 (Conf. Publ. No. 331), IEE, xiii+387 PP., PP.165-9
[2] MacDonald, R.I.;
   Frequency domain optical reflectometer;
   Appl. Opt. (USA), vol. 20, no. 10, PP. 1840-4, 15 May 1981
[3] Patent abstracts of JP-A-57 118 136, 22 July 1982.

### D. ILLUSTRATIVE EMBODIMENT

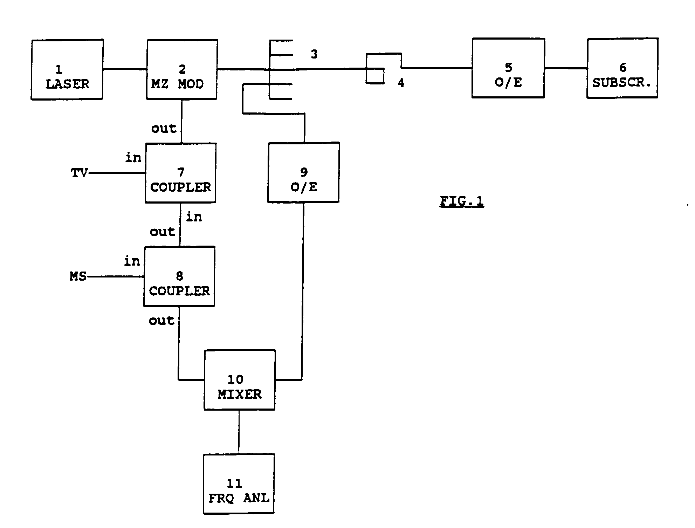

Figure 1 shows an illustrative embodiment of the invention. What is shown is a passive optical subscriber network for distributing TV signals, incorporated in which is laser 1 of which the optical output signal is modulated by a (Mach-Zehnder) modulator 2. The modulated signal is transmitted, via a system of splitters 3 and fibres 4, to the subscriber side, where the signal is converted by an opto-electrical receiver into an electrical signal, which is presented to the subscriber apparatus.

The Mach-Zehnder modulator 2 is driven by an electrical TV signal to be distributed to the subscribers. Said signal is AM/VSB modulated, for example, and can be demodulated on the subscriber side. The TV signal is presented via an electrical coupler 7, which has two inputs and one output. The output is connected to the electrical input of the modulator 2. The first input is presented with the TV signal, while the second input is connected to the output of a second coupler 8.

As soon as a failure arises in the system, this is noticed virtually immediately by the system-monitoring hardware and software. If one (or more) fibres 4 prove to have broken, attempts will be made to detect the location thereof by emitting a measuring signal. The non-faulty subscribers, who continue to be supplied with signals in the normal way, should notice as little as possible of said measuring signal being emitted. According to the present illustrative embodiment, in the case of failure a measuring signal is presented to the input of coupler 8, which signal is generated by a "frequency sweep" generator (not drawn). The frequency sweep and the sweep frequency and possible further frequency data thereof are known. The measuring signal is presented to the modulator 2 via coupler 8 and coupler 7, and thus (co-)modulates the optical signal, as a result of which an optical measuring signal is emitted. The power of the measuring signal may remain limited, while it is still possible to carry out an effective measurement, an attractive characteristic of the OFDR method.

At the place where the fibre has broken, the measuring signal is reflected. The reflected signal is picked up via the splitter 3 and is converted, via an optical (APD) receiver 9, into an electrical reflection signal. The original measuring signal and the reflected signal are both fed to a mixer 10 and via the latter to a frequency analyser 11, where the mixing product is subjected to frequency analysis. Based on that analysis, it is possible to determine the location of the failure.

## Claims

1. Method for determining fault locations in an optical network for transmitting optical signals via optical fibres, such as, for example, telephone signals or TV signals between an exchange and subscribers, which optical signals are generated in a light source with a particular wavelength, of which the output signal, by means of an electro-optical modulator, is modulated by an electrical modulation signal fed to said modulator, an optical measuring signal being fed to the network at least in the case of a fibre failure arising, the reaction of the network to that measuring signal being analysed and converted into a location indication of said fibre failure,
CHARACTERISED IN THAT the output signal of the light source, in addition to said electrical modulation signal, is furthermore modulated by said electrical measuring signal, resulting in a corresponding optical measuring signal, the reflected part of which is analyzed.

2. Method according to Claim 1,
CHARACTERISED IN THAT the electrical measuring signal is an OFDR signal having a frequency varying according to a defined pattern, reflections caused by the corresponding optical measuring signal at the location of the fibre failure resulting in an optical reflection signal which is converted by an opto-electrical converter into an electrical reflection signal, and said electrical reflection signal being compared with the electrical measuring signal, and the location of the fibre failure being calculated by means of frequency analysis of the two signals.

3. Optical network, comprising a light source (1), a modulator (2), and optical fibres (4), all these for transmitting optical signals such as, for example, telephone signals or TV signals between an exchange and subscribers, light being generated with a defined wavelength in that light source, and the exiting light being modulated by the electro-optical modulator (2) under the control of an electrical modulation signal fed to said modulator,
CHARACTERISED IN THAT said modulator (2) is connected to means (7) for feeding in said electrical modulation signal and, moreover, an electrical measuring signal, for detecting fault locations by reflectrometry.

4. Optical network according to Claim 3,
CHARACTERISED IN THAT the electrical measuring signal is an OFDR signal having a frequency varying according to a defined pattern.

## Patentansprüche

1. Verfahren zur Feststellung von mit einem Fehler behafteten Punkten in einem optischen Netzwerk zur Übertragung von optischen Signalen über Lichtwellenleiter, wie zum Beispiel Telefonsignale oder Fernsehsignale zwischen einem Verteiler und Abonnenten, wobei diese optischen Signale in einer Lichtquelle mit einer bestimmten Wellenlänge erzeugt werden, wobei deren Ausgangssignal mit Hilfe eines elektro-optischen Modulators durch ein elektrisches Modulationssignal moduliert wird, welches dem besagten Modulator zugeführt wird, und wobei ein optisches Messignal dem Netzwerk zumindest in dem Fall zugeführt wird, dass ein Versagen eines Lichtwellenleiters auftritt, wobei die Reaktion des Netzwerkes auf dieses Messignal analysiert und in eine Ortsangabe für den besagten Lichtwellenleiterausfall umgewandelt wird, **dadurch gekennzeichnet**, dass das Ausgangssignal der Lichtquelle zusätzlich zu dem besagten elektrischen Modulationssignal weiterhin durch das besagte elektrische Messignal moduliert wird, was in einem entsprechenden optischen Messignal resultiert, dessen reflektierter Anteil analysiert wird.

2. Verfahren nach Anspruch 1, dadurch gekennzeichnet, dass das elektrische Messignal ein OFDR-Signal ist, welches eine Frequenz aufweist, die mit einem vorgegebenen Muster variiert, dass Reflexionen, die von dem entsprechenden optischen Messignal am Ort des Versagens des Lichtwellenleiters herrühren, in einem optischen Reflexionssignal resultieren, welches durch einen opto-elektrischen Wandler in ein elektrisches Reflexionssignal umgewandelt wird, und dass das besagte elektrische Reflexionssignal mit dem elektrischen Messignal verglichen wird und dass der Ort des Versagens des Lichtwellenleiters durch das Mittel der Frequenzanalyse der beiden Signale berechnet wird.

3. Optisches Netzwerk mit einer Lichtquelle (1), einem Modulator (2) und optischen Lichtwellenleitern (4), wobei alle diese dafür vorgesehen sind, optische Signale, wie Telefonsignale oder Fernsehsignale zwischen einem Verteiler und Abonnenten zu übertragen, wobei Licht mit einer vorbestimmten Wellenlänge in dieser Lichtquelle erzeugt wird und wobei das austretende Licht durch den elektro-optischen modulator (2) unter der Steuerung eines elektrischen Modulationssignals moduliert wird, welches dem besagten Modulator zugeführt wird, **dadurch gekennzeichnet**, dass der Modulator (2) mit Mitteln (7) verbunden ist, um das besagte elektrische Modulationssignal und darüber hinaus ein elektrisches Messignal zuzuführen, um den Ort des Fehlers durch Reflexmessung zu bestimmen.

4. Optisches Netzwerk nach Anspruch 3, dadurch gekennzeichnet, dass das elektrische Messignal ein OFDR-Signal ist, welches eine Frequenz aufweist, die gemäss einem vorbestimmten Muster veränderlich ist.

## Revendications

1. Procédé pour la détermination de positions de défaut dans un réseau optique pour la transmission de signaux optiques via des fibres optiques comme, par exemple, des signaux de téléphone ou des signaux TV entre un échangeur et des souscripteurs, signaux optiques qui sont générés par une source de lumière à une longueur d'onde particulière dont le signal de sortie, au moyen d'un modulateur électro-optique, est modulé par un signal de modulation électrique fourni audit modulateur, un signal de mesure optique étant fourni au réseau au moins dans le cas de l'apparition d'un défaut de fibre, la réaction du réseau à ce signal de mesure étant analysée puis convertie en une indication de position dudit défaut de fibre,
procédé caractérisé en ce que le signal de sortie de la source de lumière, en plus dudit signal de modulation électrique, est modulé, de plus, par ledit signal de mesure électrique, entraînant un signal de mesure optique correspondant dont la partie réfléchie est analysée.

2. Procédé selon la revendication 1, caractérisé en ce que le signal de mesure électrique est un signal OFDR possédant une fréquence variant selon une configuration définie, les réflexions provoquées par le signal de mesure optique correspondant sur la position du défaut de fibre entraînant un signal de réflexion optique qui est converti par un convertisseur opto-électrique en un signal de réflexion électrique, et ledit signal de réflexion électrique étant comparé au signal de mesure électrique, la position du défaut de fibre étant calculée au moyen de l'analyse en fréquence des deux signaux.

3. Réseau optique comprenant une source de lumière (1), un modulateur (2) et des fibres optiques (4), pour la transmission de signaux optique comme, par exemple, des signaux de téléphone ou des signaux TV entre un échangeur et des souscripteurs, la lumière étant générée avec une longueur d'onde définie par cette source de lumière et la lumière sortante étant modulée par le modulateur électro-optique (2) sous la forme d'un signal de modulation électrique fourni audit modulateur,
réseau caractérisé en ce que ledit modulateur (2) est raccordé au moyen (7) de fourniture dudit signal de modulation électrique et de plus, d'un signal de mesure électrique pour la détection des positions de défauts par réflectométrie.

4. Réseau optique selon la revendication 3, caractérisé en ce que le signal de mesure électrique est un signal OFDR possédant une fréquence variable selon une configuration définie.
